# EUROPEAN PATENT APPLICATION

(11) **EP 4 841 014 A1**
(43) Date of publication of application: **18.11.2026**
(21) Application number: 25177065.7
(22) Date of filing: 16.05.2025
(51) Int. Cl.: D06F 58/04, F16J 15/3268, F16J 15/328

(54) **METHOD FOR ASSEMBLING A SEAL OF A DRUM OF A HOUSEHOLD APPLIANCE AND ASSEMBLY**

(71) Applicant: BSH Hausgeräte GmbH, 81739 München (DE)
(72) Inventor: Geberle, Damian, 94-058 Lodz (PL); Kubiak, Piotr, 91-320 Lodz (PL); Polek, Robert, 93-228 Lodz (PL)

(57) **Abstract**

Method for assembling a seal of a drum of a household appliance, comprising the following steps: providing a sealing element (10) comprising at least one bending portion (11), wherein the bending portion (11) comprises a thermoplastic material, providing a connection element (12) for connecting to the bending portion (11), positioning the sealing element (10) with the bending portion (11) on the connection element (12), heating the bending portion (11) until the bending portion (11) reaches a temperature at which the bending portion (11) is formable, forming the bending portion (11) such that the bending portion (11) forms a form-fit connection with the connection element (12).

## Description

The present invention relates to a method for assembling a seal. Furthermore, the invention relates to an assembly assembled by such a method.

It is known that tumble dryers use several sealing elements. In conventional dryers, maintaining a reliable seal between the rotating drum and the stationary housing is essential for efficient operation, noise reduction, and prevention of lint or moisture escape. Currently known solutions comprise an axial seal or a radial sea, which may be installed in a stationary part of the tumble dryer. The axial seal requires adhesive to secure it in the channel so that it does not rotate when the drum is rotated and does not fall out of the channel. The radial seal requires a special rib to prevent the seal from falling out of the channel and additionally girdles the inner wall of the bearing shield tightly to create a force that prevents it from rotating with the rotation of the drum. If the seal is too loose, it may fall out of the bearing shield or begin to rotate with the drum. However, existing sealing solutions often suffer from wear, inadequate flexibility, thermal degradation, or insufficient sealing performance over time.

In view of this, it is found that a further need exists to provide an improved method for assembling a sealing element, in particular of a tumble dryer.

Therefore, it is an object of the present invention to provide a method for assembling a sealing element, in particular for a tumble dryer. Furthermore, it is an object of the present invention to provide an assembly.

These and other objects, which become apparent upon reading the following description, are solved by the subject matter of the independent claims. The dependent claims refer to preferred embodiments of the invention.

According to an aspect of the present invention, a Method for assembling a seal of a drum of a household appliance, comprising the following steps: providing a sealing element comprising at least one bending portion, wherein the bending portion comprises a thermoplastic material, providing a connection element for connecting to the bending portion, positioning the sealing element with the bending portion on the connection element, heating the bending portion until the bending portion reaches a temperature at which the bending portion is formable, forming the bending portion such that the bending portion forms a form-fit connection with the connection element.

The advantage of the present invention over the known state of the art is that a firm and permanent connection of the sealing element may be provided by the method according to the present invention. Additionally, the provided method may be cost-effective and faster than other known methods.

The term sealing element may be understood broadly. The sealing element, in particular in the context of a tumble dryer, refers to a component designed to create a barrier between the rotating drum and adjacent stationary parts of the appliance. Its primary function is to prevent the escape of air, moisture, lint, and other particles from the drum cavity during operation. The sealing element may also serve to reduce mechanical noise and vibration, improve thermal insulation, and protect internal components from contamination. It may comprise flexible and/or wear-resistant materials capable of withstanding the mechanical and thermal stresses encountered during repeated drying cycles.

The bending portion may be made at least partially out of a thermoplastic material. The bending portion is configured to be connected to the connection portion. A thermoplastic material is a polymer that becomes soft and moldable or formable upon heating and hardens upon cooling. This process may be reversible and repeatable without significantly altering its chemical structure. This makes thermoplastics highly versatile in manufacturing and product design. Thermoplastic materials can be easily molded into complex shapes using methods like injection molding, extrusion, and thermoforming. Thermoplastic materials may exhibit excellent toughness, making them resistant to cracking or breaking under stress. Additionally, thermoplastic materials are generally resistant to a wide range of chemicals, including oils, acids, and solvents. Another advantage of thermoplastic materials is that these materials have a low density, making them ideal for applications where weight reduction is important. Thermoplastic materials may include Polypropylene (PP), Polyethylene (PE), Acrylonitrile Butadiene Styrene (ABS), Polyamide (Nylon) and Polycarbonate (PC).

The connection portion is configured to be connected to the bending portion of the sealing element. By positioning the bending portion on the connection element, the sealing element is prepared for the following step. The connection portion and the bending portion may therefore each comprise a corresponding geometry, shape, or structure. The connection portion may be made of a material with a higher melting point than the bending portion. The connection element may be arranged on a component of an appliance, preferably a tumble dryer. The connection element may be a portion of the drum designed to be connected to the sealing element, in particular to the bending portion.

The heating of the bending portion may be at least carried out until a temperature is reached, at which the material of the bending portion is plastically formable or moldable. Heating may be carried out by different heating methods. Generally speaking, the bending portion may be heated by contact heating, radiant heating, inductive heating, dielectric heating, laser heating, and/or gas beam heating. Contact heat may be provided by a heating plate, hot air gun, and/or a heating wire, i.e. a heating collar. Radiant heat may be provided by infrared radiation. In inductive heating, the material may be by induction currents. This may only work for plastics with conductive fillers. In dielectric heating, electromagnetic waves generate heat inside the material, in particular in certain polar plastics. During laser heating and gas beam heating, a high-precision local heating with a laser or a hot gas beam is used. It is possible, that more than one heating method may be applied to the bending portion. It may be possible that one or more heating methods may be applied to the bending portion a single time or multiple times.

The steps of the method according to the present invention do not need to be in the order disclosed above. It is possible, that the heating of the bending portion takes place before the bending portion is arranged or positioned on the connection element. Also, the forming of the bending portion may take place after the heating or during the heating of the bending portion. Accordingly, the steps may be interchanged provided that this does not conflict with the idea of the invention.

In an embodiment, the bending portion and the connection element each have a bent shape, in particular in cross-section, with a bending angle, wherein during forming, the bending portion is shaped so that the bending angle of the bending portion approaches the bending angle of the connection element. The bending angle is defined as the angle formed between a tangent line of the bending portion at a given point and a corresponding tangent- or reference- line, preferably of the sealing element. This measurement is typically expressed in degrees or radians.

In an embodiment, before forming the bending angle of the bending portion measures between 20° and 45° and wherein after forming the bending angle measures between 45° and 240°. Preferably, the bending angle of the bending portion after forming is smaller than the bending angle of the connecting element. This allows the bending portion to be placed on the connection element on the outside. After heating and forming the bending portion, the bending portion may enclose the connection element, at least in sections, so that a form-fit connection is created.

In an embodiment, after forming, the bending angle of the bent portion essentially corresponds to the bending angle of the connection element. In other words, after forming the bending portion, the bending angles are essentially the same. This makes it possible to realize a particularly tight connection between the bending portion and the connection element. In particular, a clearance between the bending portion and the connecting element may be minimized, i.e., avoided.

In an embodiment, during forming the bending portion is pressed against the connection element. This means that the bending portion is subjected to a force. In particular, a surface of the bending portion directed away from the connecting element may be subjected to a force. The force may be preferably directed essentially in the direction of the connecting element. The force acting on the bending portion may be a point force, a linear force, and/or a surface force.

In an embodiment, after forming at least 50%, in particular at least 60%, in particular at least 70%, in particular at least 80%, in particular at least 90%, in particular all, of a surface of the bending portion rests against the connection portion, in particular on an outwardly directed surface of the connection element. The outwardly directed surface of the connection element faces the bending portion during forming. This makes it possible for the bending portion to have the largest possible contact area with the connecting element. This makes it possible to achieve a particularly strong and stable connection. In particular, the bending portion may be in continuous contact after forming. This means that the contact area of the bending portion and the connecting element is essentially uninterrupted.

In an embodiment, after forming the sealing element is inseparably connected to the connection element. In other words, the sealing element and the connecting element cannot be separated from each other without being destroyed. It is possible that the sealing element may be removed from the connection element by reheating the bending portion.

In an embodiment, the connection element and the sealing element have an annular geometry wherein the bending portion extends circumferentially. Preferably, the sealing element and/or the connection element may be ring-shaped. This means that the sealing element and the connecting element are amended to each other. In particular, the sealing element is suitable for connection to a dryer drum. The ring-shaped sealing element may be arranged on the circular connecting element and connected to one another according to the method according to the invention. The bending portion may, for example, be bent in the direction of the center point, i.e. in a radial direction, during forming. In an embodiment, the connection element is arranged around an opening of a drum of a tumble dryer, and after forming the sealing element seals the drum against a front functional component. The connection element may be part of the drum or connected to the drum.

In an embodiment, the bending portion comprises a form-fit element, wherein after forming the form-fit element interacts with the connection element to interlock the bending portion with the connection portion. The form-fit element may, for example, be designed as a protrusion. In the case of an annular sealing element, for example, the protrusion may extend in the circumferential direction. The protrusion may extend away at a right angle to a surface of the sealing element. In the assembled state, the protrusion is arranged on a surface of the sealing element that essentially faces the connecting element.

In an embodiment, during heating the bending portion is heated partially or completely. In other words, the bending portion may be heated and formed section by section. Alternatively, it is possible to heat the entire bending portion as a whole and then form it as a whole or in sections.

A further aspect of the present invention, an assembly may be provided comprising a sealing element and a drum of a tumble dryer with a connection element, wherein the sealing element is connected to the drum by a method according to one of the preceding claims.

Another aspect may be directed to a sealing element comprising a bending portion, a flexible portion, and a sealing portion, wherein the bending portion comprises a thermoplastic material, the flexible portion comprises an elastic material and the sealing portion comprises a hard plastic material, wherein the bending portion is configured to be connected by heating and forming. The flexible portion of the sealing element refers to a structurally flexible section designed to deform elastically in response to a relative movement between the drum and the stationary components of a tumble dryer. This portion allows the sealing element to maintain continuous contact with dynamic surfaces, such as the rotating drum while accommodating misalignments, thermal expansion, or vibration during operation. The flexible portion is typically shaped or dimensioned to provide a controlled degree of flexibility, ensuring both effective sealing performance and long-term mechanical durability. The sealing portion is designed to withstand friction. The sealing portion is designed to be in constant contact with a surface. Therefore, the material of the sealing element may be more durable than the remaining portions of the sealing element. The bending portion may be made at least partially out of a thermoplastic material. The bending portion is configured to be connected to the connection portion. A thermoplastic material is a polymer that becomes soft and moldable or formable upon heating and hardens upon cooling. The sealing element may be produced by multi-component injection molding, for example.

Further, a household appliance is possible, comprising a seal assembled by a method according to one of the preceding embodiments.

In the following, the present disclosure is described exemplarily with reference to the enclosed figures, in which
- **Figure 1**: is a cross-section through an embodiment of a sealing element according to the invention;
- **Figure 2**: is a cross-section through an embodiment of a sealing element and connecting element according to the invention;
- **Figure 3**: is a further cross-section through an embodiment of a sealing element and connecting element according to the invention; and
- **Figure 4**: is a perspective view of a drum with a sealing element.

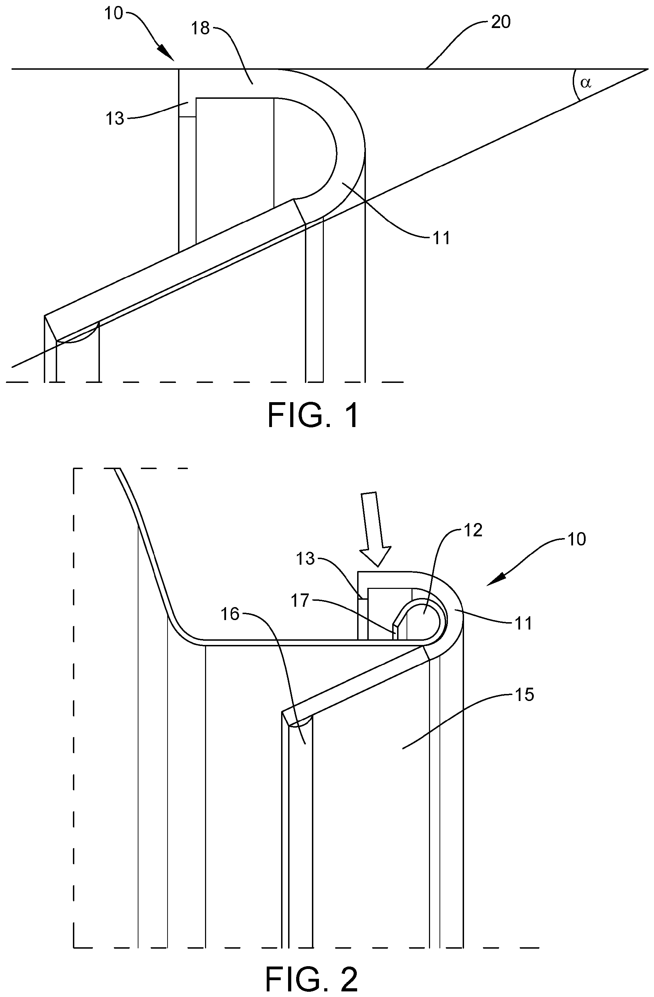

Figure 1 shows a section of a sealing element 10. The sealing element 10 is ring-shaped. This means that the sealing element 10 is designed to be arranged on a drum 14 of a clothes dryer. The sealing element 10 comprises a bending portion 11, a flexible portion 15, and a sealing portion 16, which extend in the circumferential direction. The sealing portion 16 is arranged at one axial end of the flexible portion 15. A form-fitting element 13 is arranged at one axial end of the bending portion 11. The form-fitting element 13 extends in the circumferential direction of the sealing element 10. The bending portion 11 has a curvature or a bend with a bending angle α. The bending portion 11 is made of a thermoplastic material. The flexible portion 15 is made of an elastic material. The sealing section 16 is made of a hard plastic material.

The sealing element 10 has a bending angle α. The bending angle is the angle, between the flexible portion 15 and the bending portion 11. More precisely, the bending angle α is the angle between a tangent through a surface of the bending portion and a tangent through a surface of the flexible portion. A tangent is to be understood as a line through a single point of a structure or a surface.

Figure 2 shows the sealing element 10 according to Figure 1 during assembly with a connecting element 12. The connecting element 12 is preferably part of a drum 14 of a dryer. The connecting element 12 has a curved area. The sealing element 10 with the bending portion 11 is arranged on the curved area. The bending portion 11 of the sealing element 10 is heated until a certain temperature. In more detail, the bending portion 11 is heated until a temperature is reached at which the bending portion 11 is plastically formable or moldable. Subsequently, the bending portion 11 is subjected to a force. The force, with which the bending portion 11 is subjected, is schematically represented as an arrow. The force is directed at least in sections in the direction of the connecting element 12. The force is big enough to plastically deform the bending portion 11. The form may be applied by hand, a tool, or a machine designed to form the bending portion 11 into a certain shape.

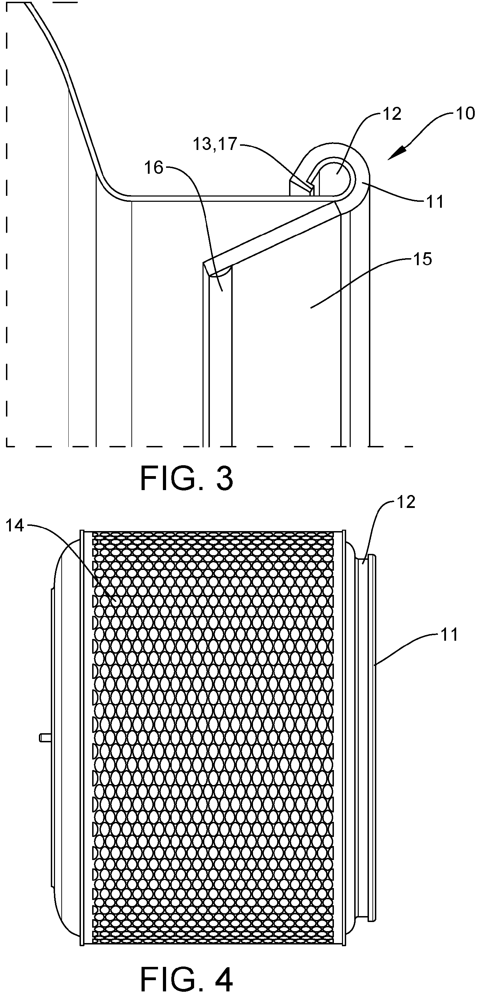

The bending portion 11 is formed or molded by the applied force until the bending portion 11 forms a form-fitting connection with the connecting element 12, as shown in Figure 3. For this purpose, the connecting element 12 has a recess 17. The recess 17 is amended to the form-locking element 13 so that after forming the form-locking element is arranged in the recess 17 and forms a form-locking connection with the connecting element 12.

Figure 4 shows an overall view of an arrangement with the drum 14 with connection portion 12, on which the sealing element 10 is arranged. It can be seen that the connection portion 12 and the sealing element 10 are of an annular configuration and are arranged on a front side of the drum 16. In the fully assembled state of the drum 14 with the connection portion 12 and the sealing element 10, the sealing element 10 seals the drum with respect to a functional component of the dryer.

The present disclosure has been described in conjunction with a preferred embodiment as examples as well. However, other variations can be understood and effected by those persons skilled in the art and practicing the claimed invention, from the studies of the drawings, this disclosure, and the claims. In the claims as well as in the description the word "comprising" does not exclude other elements or steps and the indefinite article "a" or "an" does not exclude a plurality. A single element or other unit may fulfill the functions of several entities or items recited in the claims. The steps of the method are interchangeable, as long as it is in the scope of the invention. The mere fact that certain measures are recited in the mutually different dependent claims does not indicate that a combination of these measures cannot be used in an advantageous implementation.

### Reference signs

- α: bending angle
- 10: sealing element
- 11: bending portion
- 12: connection element
- 13: form-fit element
- 14: drum
- 15: flexible portion
- 16: sealing portion
- 17: recess

## Claims

1. Method for assembling a seal of a drum of a household appliance, comprising the following steps:
- providing a sealing element (10) comprising at least one bending portion (11), wherein the bending portion (11) comprises a thermoplastic material,
- providing a connection element (12) for connecting to the bending portion (11),
- positioning the sealing element (10) with the bending portion (11) on the connection element (12),
- heating the bending portion (11) until the bending portion (11) reaches a temperature at which the bending portion (11) is formable,
- forming the bending portion (11) such that the bending portion (11) forms a form-fit connection with the connection element (12).

2. Method according to claim 1, wherein the bending portion (11) and the connection element (12) each have a bent shape with a bending angle (α), wherein during forming, the bending portion is shaped so that the bending angle (α) of the bending portion (11) approaches the bending angle (α) of the connection element (12).

3. Method according to claim 2, wherein before forming the bending angle of the bending portion (11) measures between 20° and 45° and wherein after forming the bending angle measures between 45° and 240°.

4. Method according to one of the claims 2 to 3, wherein after forming, the bending angle of the bending portion essentially corresponds to the bending angle of the connection element.

5. Method according to one of the preceding claims, wherein during forming, the bending portion (11) is pressed against the connection element (12).

6. Method according to one of the preceding claims, wherein after forming, at least 50%, in particular at least 60%, in particular at least 70%, in particular at least 80%, in particular at least 90%, in particular all, of a surface of the bending portion (11) rests against the connection element (12), in particular on an outwardly directed surface of the connection element (12).

7. Method according to one of the preceding claims, wherein after forming the sealing element (10) is inseparably connected to the connection element (12).

8. Method according to one of the preceding claims, wherein the connection element (12) and the sealing element (10) have an annular geometry, wherein the bending portion (11) extends circumferentially.

9. Method according to one of the preceding claims, wherein the bending portion (11) comprises a form-fit element (13), wherein after forming the form-fit element (13) interacts with the connection element (12) to interlock the bending portion (11) with the connection portion (12).

10. Method according to one of the preceding claims, wherein during heating the bending portion (11) is heated partially or completely.

11. Assembly comprising a sealing element (10) and a drum (14) of a tumble dryer with a connection element (12), wherein the sealing element (10) is connected to the drum (14) by a method according to one of the preceding claims.

12. Sealing element (10) comprising a bending portion (11), a flexible portion (15) and a sealing portion (16), wherein the bending portion (11) comprises a thermoplastic material, the flexible portion (15) comprises an elastic material and the sealing portion (16) comprises a hard plastic material, wherein the bending portion (11) is configured to be connected by heating and forming.
